**Europäisches Patentamt**

(19) **European Patent Office**

**Office européen des brevets**

(11) Publication number : **0 455 307 B1**

## (12) EUROPEAN PATENT SPECIFICATION

(45) Date of publication of patent specification :
**10.08.94 Bulletin 94/32**

(51) Int. Cl.⁵ : **B01J 23/00,** B01J 37/00,
C04B 35/48, C04B 35/44

(21) Application number : **91201047.7**

(22) Date of filing : **02.05.91**

(54) **Process for the preparation of alumina-based extrudates.**

(30) Priority : **04.05.90 GB 9010075**

(43) Date of publication of application :
**06.11.91 Bulletin 91/45**

(45) Publication of the grant of the patent :
**10.08.94 Bulletin 94/32**

(84) Designated Contracting States :
**AT BE CH DE DK ES FR GB GR IT LI LU NL SE**

(56) References cited :
EP-A- 0 199 399
NL-A- 7 614 173
US-A- 4 388 222

(56) References cited :
**CHEMICAL ABSTRACTS, vol. 114, no. 22, June 3, 1991, Columbus, Ohio, US; abstract no. 210402F, Preparation of hydrorefining extruded catalyst**
**English translation of CS-A- 264 792**
**World Patents Index, ACCESSION NUMBER 89-197055 (DW 8927) DERWENT PUBL. LTD., London GB & JP-A-1135530 (MITSUBISHI ET AL.) (29-5-1989)**

(73) Proprietor : **SHELL INTERNATIONALE RESEARCH MAATSCHAPPIJ B.V.**
**Carel van Bylandtlaan 30**
**NL-2596 HR Den Haag (NL)**

(72) Inventor : **Joustra, Annie Hendrika**
**Badhuisweg 3**
**NL-1031 CM Amsterdam (NL)**
Inventor : **Scheffer, Bob**
**Badhuisweg 3**
**NL-1031 CM Amsterdam (NL)**

EP 0 455 307 B1

Jouve, 18, rue Saint-Denis, 75001 PARIS

## Description

The present invention relates to a process for the preparation of an alumina-based catalyst to the catalyst so-obtained, and to a catalytic process in which the alumina-based extrudate catalyst is used.

The preparation of hydrocarbons from mixtures comprising hydrogen and carbon monoxide by contacting this mixture at elevated temperature and pressure with a catalyst is known in the literature as the Fischer-Tropsch synthesis. A catalyst often used for this hydrocarbon synthesis comprises cobalt, iron and/or nickel, a promoter, and a carrier material. These catalysts can suitably be prepared by deposition of the active components on the carrier material techniques known in the art, such as precipitation, impregnation, kneading and melting.

Recently a class of Fischer-Tropsch catalysts has been found, which catalysts have the property of yielding a hydrocarbon mixture comprising only very few olefins and oxygen-containing compounds and consisting substantially of unbranched paraffins. A considerable portion of the hydrocarbons in this mixture boil above the boiling temperature of kerosine and gas oil fractions obtained in the conventional atmospheric distillation of crude mineral oil (the so-called middle distillates; boiling range 150-360 °C). It has been found that the high boiling portion of this product may be converted at high yields into middle distillates by means of hydrocracking. As a feedstock for hydrocracking at least a portion of the product is chosen such that the initial boiling point lies above the final boiling point of the heaviest middle distillates desired as end product. Hydrocracking of the product, typically proceeding at very low hydrogen consumption, yields middle distillates having a considerably better pour point than those obtained by the direct synthesis of middle distillates using the Fischer-Tropsch hydrocarbon synthesis process.

Fischer-Tropsch catalysts in the aforementioned class typically comprise silica, alumina or silica/alumina as carrier material, and cobalt, iron or nickel, together with a promoter selected from the groups IIa, IIIb, IVb and Vb of the Periodic Table, for instance zirconium, titanium, chromium or magnesium. During the preparation of these catalysts, the catalytically active metal, that is cobalt, iron or nickel, and the promoter are deposited on the carrier material, after which the resulting catalyst is calcined. The catalyst is activated before final use in the Fischer-Tropsch synthesis by means of reduction, the purpose of which is to reduce oxides of the catalytic species to their metallic states.

When alumina is used as the carrier material, a number of drawbacks have been encountered. Firstly, it has been observed that during the preparation of alumina-based catalysts the addition of ruthenium and/or platinum/palladium is required in order to increase the reducibility of the catalytic metal to an acceptable level. Even so, relatively high reduction temperatures are still required for such catalysts. The cost of these metals is very high and is prohibitive of the industrial production of these catalysts.

Secondly, it is known in the art that catalysts of the aforementioned class, particularly those comprising cobalt supported on alumina, show a lower carbon monoxide hydrogenation activity in comparison to similar catalysts comprising cobalt supported on silica (Journal of Catalysis Volume 85, page 78-88, 1984).

Most surprisingly, research has now revealed that the aforementioned drawbacks may be overcome if, in the manufacture of this type of catalyst, use is made of an alumina-based extrudate comprising a co-extruded cobalt, iron or nickel source.

Such extrudates are known from Czechoslovak patent specification No. 264,792 (CS-264,792) and United States patent specification No. 4,388,222 (US-4,388,222). CS-264,792 describes a process for the preparation of a catalyst by extrusion of Group VI and/or VIII metals of the Periodic Table together with aluminium hydrate, followed by drying and calcining. US 4,388,222 describes the preparation of catalysts having an alumina/titania extrudate carrier. Catalytically active metals may be incorporated into the extrudate prior to extrusion. Both documents fail to disclose the preparation of catalysts having catalytically active metals in the reduced state.

It is noted that the manner by which a promoter may be incorporated in the extrudate is not critical, and it may be co-extruded with the alumina and the cobalt, iron or nickel source or it may be deposited on the alumina-based extrudates by conventional means. The extrudates obtained show a good crush strength and are very suitable for the preparation of Fischer-Tropsch catalysts showing high activity, selectivity and stability. Furthermore, these catalysts can be easily reduced at reduction temperatures below 300 °C, preferably at 260 to 270 °C so that in situ reduction is industrially feasible.

Accordingly, the present invention provides a process for preparing a catalyst by reducing a catalyst precursor obtainable by calcining an alumina-based extrudate prepared by a process comprising the steps of:

i) preparing an extrudable mixture of an alumina precursor, a cobalt, iron or nickel source and a solvent;

ii) extruding the mixture; and

iii) drying the so-formed extrudate.

In a preferred embodiment of the invention a cobalt source is used in the preparation of the extrudable mixture.

The matrix of the extrudate comprises an extruded alumina precursor. The alumina precursor may comprise aluminium oxides, aluminium hydroxides, aluminium oxide hydroxides, or mixtures thereof. Preferred alumina precursors are aluminium hydroxides having free hydroxyl groups and which, upon calcination, are converted into porous alumina of good crush strength. Examples of aluminium hydroxides are boehmite, pseudoboehmite, diaspor, gibbsite, bayerite and nordstrandite. Most preferred alumina precursors are diaspor, boehmite and, in particular, pseudoboehmite. Upon calcination, diaspor is converted into alpha-alumina, whereas boehmite is converted into gamma-alumina, delta-alumina, or alpha-alumina, at calcination temperatures of 450 to 560 °C, 750 to 1000 °C and greater than 1000 °C, respectively. Pseudoboehmite tends to the formation of fibers on ageing and drying. The surface area of the alumina may be as high as 500 $m^2/g$.

The alumina precursor is mixed with the cobalt, iron or nickel source and the solvent to form an extrudable mixture. The solvent is used to provide an intimate mixture of the alumina precursor and the cobalt, iron or nickel source and may be any of the suitable solvents known in the art.

Solvents suitable for providing an extrudable mixture or dough include polar solvents, such as water and lower alkanols, such as ethanol and methanol, and mixtures thereof. The solvent is most conveniently water. The amount of solvent used to form the extrudable mixture is such that the resulting mixture has the appropriate extrusion properties, that is the mixture may be easily extruded through the appropriate die plate with the resulting extrudates retaining their form during the drying procedure. Typically, the extrudable mixture comprises the solvent in an amount of from 20% by weight to 120% by weight on the basis of the dry weight of the alumina precursor.

The extrudable mixture is preferably in the form of a dough, obtainable by the peptisation of the alumina precursor. Suitable peptising agents for inclusion in the extrudable mixture are well known in the art and include weak acids, for example formic acid, acetic acid and propionic acid. Acetic acid is a particularly preferred peptising agent. The amount of peptising agent is sufficient to form a dough and is typically from 1 to 25% by weight on the basis of the dry weight of the alumina precursor. Preferably, the extrudable mixture comprises from 3 to 20% by weight peptising agent. It has been found that extrudable mixtures comprising a peptising agent in an amount in the upper region of the preferred range, that is from 10 to 20% by weight, particularly about 15% by weight, result in particularly strong alumina-based extrudates.

Although alumina is preferably used as the extrudate matrix, mixtures of alumina with titania and/or silica and/or zirconia may be used, provided that the extrusion properties of the mixture are not adversely affected.

An essential feature of the process according to the invention is the co-extrusion of the cobalt, iron or nickel source with the alumina precursor. The cobalt, iron or nickel source comprises any compound suitable for forming an extrudable mixture with the alumina precursor and the solvent and allowing the cobalt, iron or nickel compound to be reduced to the metallic element. Examples of suitable cobalt, iron or nickel-containing compounds are inorganic or organic salts, for example nitrates, hydroxides and oxides. Specific examples for the sources for cobalt are cobalt nitrate and cobalt hydroxide. In general, hydroxides are preferred as sources for the cobalt, iron or nickel because during reduction the volatile decomposition product (water) does not result in environmental problems.

Generally, the amount of the cobalt, iron or nickel source is selected such that the catalysts prepared comprise 10 to 300 parts by weight cobalt, iron or nickel per 100 parts by weight alumina. Preferably, the amount of cobalt, iron or nickel in the final catalyst lies in the range of 25 to 200 parts by weight, preferably 40 to 100 parts by weight, most preferably 50 to 100 parts by weight per 100 parts by weight alumina.

The rheology of the extrudable mixture may be improved by adding a structuring agent, such as polyacrylamides, for example those sold under the trademark NALCO, and carboxymethyl cellulose, for example sold under the trademark AVICEL.

To improve the flux properties of the extrudable mixture in the extruder a surface active agent or a polyelectrolyte may be added. The surface active agent or the polyelectrolyte lowers the viscosity of the mixture, gives a smoother extrudate texture and facilitates cutting of the extruded product. Further, formation of macropores in the calcined catalytic material may be improved by the inclusion of such agents, which may in turn enhance the catalytic properties of the final products. Suitable surface active agents include cationic surface active agents, for example fatty amines, quaternary ammonium compounds, aliphatic monocarboxylic acids, ethoxylated alkyl amines, polyvinyl pyridine, sulfoxonium, sulfonium, phosphonium and iodonium compounds, anionic surface active agents, for example alkylated aromatics, acyclic monocarboxylic acids, fatty acids, sulfonated aromatics, alcohol sulfates, ether alcohol sulfates, sulfated fats and oils and phosphonic acid salts and non-ionic surface active agents, for example polyoxyethylene alkylphenols, polyoxyethylene alkylamides, polyols and acetylenic glycols.

The extrudable alumina precursor, the cobalt, iron or nickel source and the solvent are co-mulled such that by the intimate mixing of these ingredients the extrudable mixture is formed. The mixing time is typically from 10 to 100 minutes, preferably 35 to 80 minutes. Generally, the extrudable mixture has a solids content

3

of from 15 to 65% by weight, preferably 25 to 55% by weight.

After co-mulling, the extrudable mixture may be extruded using a conventional extruder. An extruder of the screw-type may be used to extrude the mixture through a die plate with orifices of the desired form and size. The extruded strands so-formed are cut to the desired length and then dried. The extrudates may be formed with any appropriate cross-sectional design, for example, circular, multi-lobed forms or the extrudate forms disclosed in US patent 4,028,227. Trilobe extrudates and hollow cylinders are very suitable products.

The extrudates may comprise one or more promotors selected from the groups IIa, IIIb, IVb and Vb of the Periodic Table, for example zirconium, titanium, chromium or magnesium, in particular zirconium. Rhenium may also be used as a promoter. The promoter may be added to the extrudate by conventional deposition techniques, or by incorporation in the mixture to be extruded. If the promoter is to be deposited on the extrudates, any conventional deposition technique may be used, such as impregnation. Conventional deposition methods are disclosed in US patent 4,522,939. Preferably, the promoter is added to the extrudable mixture, so that the use of a separate deposition step may be avoided and the required extrudates may be formed in one single operation.

Any promoter source may be used. When the promoter source is added to the extrudable mixture, it is desired that the extrusion properties of the mixture are not adversely affected. Both inorganic and organic promoter compounds are suitable for incorporation in the extrudable mixture. Examples of suitable compounds are oxides, hydroxides, and carbonates. Suitable zirconium compounds are zirconium hydroxide, zirconium carbonate and ammonium zirconium carbonate.

Although the amount of promoter used depends on the manner by which the promoter is added (deposition or co-extrusion), the amount of promoter generally lies in the range of 0.1 to 100 parts by weight promoter per 100 parts by weight alumina. Preferably, the amount of promoter is 5 to 50 parts by weight alumina.

After extrusion a catalyst is prepared by a process comprising calcining the alumina-based extrudate prepared by the process hereinbefore described. The calcination temperature is typically in the range of from 300 to 1000 °C, preferably 400 to 900 °C. If the extrudable mixture used for forming the extrudate does not comprise a promoter, the process for the preparation of the catalyst optionally comprises an additional step in which the promoter compound is deposited on the extrudate prior to calcination.

After calcination the active catalyst according to the present invention is formed by reduction, preferably at a reduction temperature of less than 300 °C, of the catalyst precursor obtained after calcination. Most preferred is a reduction temperature in the range of 250 to 280 °C. This reduction may be in situ, that is performed with the catalyst retained in the reactor. The reduction is very suitably carried out by contacting the catalyst with hydrogen or a hydrogen-containing gas.

In addition, the present invention provides a catalyst obtainable by the process hereinbefore described.

In yet a further aspect, the present invention provides a process for the synthesis of hydrocarbons using the aforementioned catalyst.

The preparation of hydrocarbons from a feed comprising synthesis gas, optionally in combination with methanol, comprises contacting the feed with the above described catalyst and is generally performed at a temperature of from 100 to 600 °C, more typically 150 to 350 °C, preferably 180 to 270 °C, most preferably 200 to 250 °C, and at a total pressure of generally 1 to 200 bar absolute, preferably 10 to 70 bar absolute. The space velocity is typically from 200 to 20,000 $m^3$ (STP) gaseous feed/$m^3$ reaction zone/hour. The term "STP" as used herein refers to a Standard Temperature (of 0 °C) and Pressure (of 1 bar absolute). Preferably, the feed comprises hydrogen and carbon monoxide in a molar ratio of 0.9:1 to 3:1, preferably 1:1 to 2.3:1.

In a preferred embodiment of the process according to the present invention, the preparation of hydrocarbons from carbon monoxide and hydrogen is used as the first step in a two-step process for the preparation of middle distillates.

To this end the hydrocarbon product, or at least that part of the product which has an initial boiling point above the final boiling point of the desired middle distillate fraction, is subjected to a catalytic hydrotreatment as the second step in the process. The catalytic hydrotreatment is suitably carried out by contacting the hydrocarbon material from the first step at elevated temperatures and pressures and in the presence of hydrogen with a catalyst comprising one or more metals having hydrogenation activity, supported on a carrier.

In the hydrotreatment preference is given to the use of a catalyst comprising one or more metals from Group VIII, supported on a carrier. In particular, a catalyst is preferred comprising platinum on a carrier, 13 to 15% by weight of which is alumina and the remainder of silica. Preferred reaction conditions in the hydrotreatment are temperatures in the range of from about 175 to 400 °C, in particular in the range of from 250 to 350 °C, a hydrogen partial pressure of 1 to 25 MPa, in particular 2.5 to 15 MPa, a space velocity of 0.1 to 5 kg.l/h, in particular 0.25 to 2 kg.l/h and a hydrogen/oil ratio of 100 to 5000 Nl/kg, in particular 250 to 2500 Nl/kg.

The process for the preparation of the alumina-based extrudates and for the preparation of catalysts using the extrudates so-obtained is further described in the following illustrative examples.

EXAMPLE 1

Preparation of the extrudate

Various extrudates, the composition of which is given in Table I, were prepared as follows: Pseudoboehmite was peptised using diluted glacial acetic acid (3% by weight on dry basis). Thereafter the cobalt source and zirconium source were added in any desired order. Finally, water was added in such an amount that for the extrusion mixture the required loss on ignition (LOI) was obtained. This mixture was co-mulled by intimate mixing for the given mixing time. Finally, the structuring agent, AVICEL, was added and optionally a flux improving agent.

The extrudable mixture obtained was extruded using a 1" Bonnet extruder with a 1.7 mm delrin trilobe matrix. The extrudates, having a trilobe form, were dried and calcined at about 500 °C.

All extrusion mixtures showed a good to excellent extrudability.

Catalytic performance

The calcined extrudates, now called catalysts and indicated with the same numeral, were crushed, loaded into a reactor and dried at 260 °C in a nitrogen stream. The dried catalyst was reduced by increasing the hydrogen content of the nitrogen stream. The reduction temperature was 260 °C.

After reduction the temperature was lowered to about 195 °C and the pressure was gradually increased to 26 bar.

Synthesis gas was introduced into the reactor at a gas hourly space velocity of 800 Nl/l/hr. The temperature of the catalyst was adjusted such that a $H_2$+CO conversion of 60 to 70% was obtained, corresponding to a space time yield (STY) of about 100 g/l/h. The performance of these catalysts, expressed as $C_5$+ selectivity is given in Table II.

For comparison purposes the catalytic performance of two prior art catalysts was tested, namely an impregnated 25Co/1Zr/100$SiO_2$ catalyst and an impregnated 25Co/1La/0.5Ru/100$Al_2O_3$ catalyst. The former catalyst was reduced at 260 °C, whereas the latter catalyst was reduced at 350 °C. Under similar synthesis conditions the $C_5$+ selectivity was 90% and 88% by weight, respectively. Thus, it can be seen that the catalysts prepared according to the present invention suffered neither of the disadvantages associated with the prior art alumina-based catalysts discussed above and, indeed, have shown improved activity.

TABLE I

|  | Extrudate | | | |
| Material | 1 | 2 | 3 | 4 |
| --- | --- | --- | --- | --- |
| Alumina precursor[1]: | | | | |
| Pseudoboehmite | 1337 | 84 | 84 | 76 |
| Co-source[1]: | | | | |
| $Co(OH)_2$ | 1264 | 28 | 28 | 72 |
| Zr-source[1]: | | | | |
| $Zr(OH)_4$ | 580 | 13 | -- | -- |
| $(NH_4)_2Zr(CO_3)_2$ | -- | -- | 14 | 33 |
| Solvent (g): | | | | |
| water | 1275 | 80 | 70 | 20 |
| Acetic acid (g): | 87 | 4 | 4 | 5 |
| Structuring agent (g): | 40 | 1.6 | 1.6 | 2.3 |
| LOI (% by wt): | 47 | 50 | 53 | 51 |
| Mixing time (min.): | 40 | 57 | 70 | 57 |
| Extrudability: | excellent | good | smooth extrudate | smooth extrudate |
| Weight ratio $Al_2O_2/Co/Zr$: | 100/70/32 | 100/25/12 | 100/25/12 | 100/70/32 |

1) dry weight (g) on the basis of oxides

## TABLE II

| Conditions | Catalyst | | | |
|---|---|---|---|---|
| | 1 | 2 | 3 | 4 |
| Reduction temperature (°C) | 260 | 260 | 260 260 | 260 |
| $H_2$/CO feed ratio | 1.1 | 1.1 | 1.1 1.1 | 2.0 |
| Temperature (°C) | 202 | 220 | 222 201 | 193 |
| Run (hr) | 135 | 100 | 110 110 | 70 |
| $H_2$+CO conversion | 67 | 61 | 65 63 | 66 |
| STY (g/l/h) | 108 | 100 | 105 104 | 106 |
| $C_5$+ selectivity (% wt) | 91 | 87 | 89 91 | 89 |

EXAMPLE 2

Six further extrudates were prepared using the basic procedure outlined in Example 1 above. The compositions of the extrudates are set out in Table III.

The crush strength (N/m) of the extrudates obtained was tested, the values of which are given in Table III. It can be seen that the process as described hereinbefore can be used to prepare alumina-based extrudates having a very high crush strength. In particular, it can be seen that the use of amounts of peptising agent in the upper region of the preferred 3 to 20% range gives rise to extrudates having a particularly high crush strength.

7

## TABLE III

| Material | Extrudate | | | | | |
|---|---|---|---|---|---|---|
| | 5 | 6 | 7 | 8 | 9 | 10 |
| Alumina precursor[1]: | | | | | | |
| Pseudoboehmite | 75 | 75 | 75 | 75 | 75 | 75 |
| Co-source[1]: | | | | | | |
| $Co(OH)_2$ | 71.5 | 71.5 | 71.5 | 71.5 | 71.5 | 71.5 |
| Zr-source[1]: | | | | | | |
| $Zr(OH)_4$ | 32.4 | 32.4 | 32.4 | 32.4 | 32.4 | 32.4 |
| Solvent (g): | | | | | | |
| water | 100 | 100 | 100 | 80 | 80 | 80 |
| Acetic acid (% wt)[2]: | 6.5 | 6.5 | 6.5 | 15 | 15 | 15 |

1) dry weight (g) on the basis of oxides

2) on the basis of dry weight of alumina

## TABLE III (Cont'd)

| Material | Extrudate | | | | | |
|---|---|---|---|---|---|---|
| | 5 | 6 | 7 | 8 | 9 | 10 |
| Structuring agent (% wt): | 3.6 | 3.6 | 3.6 | 3.6 | 3.6 | 3.6 |
| LOI (% by wt): | 47.5 | 47.5 | 47.5 | 45.8 | 45.8 | 45.8 |
| Mixing time (min.): | 74 | 74 | 74 | 80 | 80 | 80 |
| Extrudability: | Excellent | Excellent | Excellent | Excellent | Excellent | Excellent |
| Calcining temperature (°C): | 560 | 630 | 700 | 560 | 630 | 700 |
| Crush Strength (N/m): | 51 | 53 | 45 | 74 | 78 | 89 |

**Claims**

1. Process for preparing a catalyst by reducing a catalyst precursor obtainable by calcining an alumina-based extrudate prepared by a process comprising the steps of:

9

i) preparing an extrudable mixture of an alumina precursor, a cobalt, iron or nickel source and a solvent;
ii) extruding the mixture; and
iii) drying the so-formed extrudate.

2. Process as claimed in claim 1, characterised in that the reduction is carried out at a temperature of less than 300 °C.

3. Process as claimed in claim 2, characterised in that the reduction is carried out at a temperature in the range of 250 to 280 °C.

4. Process as claimed in any preceding claim, characterized in that the alumina precursor is selected from the group comprising boehmite, pseudoboehmite, gibbsite and mixtures thereof.

5. Process as claimed in any preceding claim, characterized in that the cobalt, iron or nickel source is a compound selected from the group comprising cobalt, iron or nickel carbonate, hydroxide, nitrate and mixtures thereof.

6. Process as claimed in any preceding claim, characterized in that the extrudable mixture comprises a cobalt source.

7. Process as claimed in any preceding claim, characterized in that the extrudable mixture further comprises a peptising agent.

8. Process as claimed in claim 7, characterized in that as peptising agent the mixture comprises from 10 to 20% by weight acetic acid on the basis of dry weight alumina.

9. Process as claimed in any preceding claim, characterized in that the extrudable mixture further comprises a promoter source wherein the promoter is selected from the groups IIa, IIIb, IVb and Vb of the Periodic Table.

10. Process as claimed in claim 9, characterized in that the promoter source is a compound selected from hydroxides, carbonate and carbonates of the promoter.

11. Process as claimed in any one of claims 1-8, characterised in that prior to calcining, a promoter source is deposited on the alumina-based extrudate, wherein the promoter source is selected from the groups IIa, IIIb, IVb and Vb of the Periodic Table.

12. A catalyst obtainable by a process as claimed in any one of the preceding claims.

13. Process for the preparation of hydrocarbons comprising contacting methanol and/or a mixture of carbon monoxide and hydrogen with a catalyst as claimed in claim 12.

**Patentansprüche**

1. Verfahren zur Herstellung eines Katalysators durch Reduzieren eines Katalysatorvorläufers, der durch Calcinieren eines Extrudats auf Aluminiumoxidbasis erhältlich ist, das nach einem Verfahren hergestellt ist, welches die folgenden Stufen umfaßt:
i) Herstellen eines extrudierbaren Gemisches aus einem Aluminiumoxidvorläufer, einer Kobalt-, Eisen- oder Nickelquelle und einem Lösungsmittel;
ii) Extrudieren des Gemisches; und
iii) Trocknen des so gebildeten Extrudats.

2. Verfahren nach Anspruch 1, dadurch gekennzeichnet, daß die Reduktion bei einer Temperatur von unter 300°C ausgeführt wird.

3. Verfahren nach Anspruch 2, dadurch gekennzeichnet, daß die Reduktion bei einer Temperatur im Bereich von 250 bis 280°C ausgeführt wird.

4. Verfahren nach einem der vorstehenden Ansprüche, dadurch gekennzeichnet, daß der Aluminiumoxidvorläufer aus der aus Boehmit, Pseudoboehmit, Gibbsit und Gemischen hievon bestehenden Gruppe ausgewählt ist.

5. Verfahren nach einem der vorstehenden Ansprüche, dadurch gekennzeichnet, daß die Kobalt-, Eisen- oder Nickelquelle eine aus der aus Kobalt-, Eisen- oder Nickelcarbonat, -hy-droxid, -nitrat und Gemischen hievon bestehenden Gruppe ausgewählte Verbindung ist.

6. Verfahren nach einem der vorstehenden Ansprüche, dadurch gekennzeichnet, daß das extrudierbare Gemisch eine Kobaltquelle umfaßt.

7. Verfahren nach einem der vorstehenden Ansprüche, dadurch gekennzeichnet, daß das extrudierbare Gemisch weiterhin ein Peptisierungsmittel umfaßt.

8. Verfahren nach Anspruch 7, dadurch gekennzeichnet, daß das Gemisch als Peptisierungsmittel 10 bis 20 Gew.-% Essigsäure, bezogen auf Aluminiumoxidtrockengewicht, umfaßt.

9. Verfahren nach einem der vorstehenden Ansprüche, dadurch gekennzeichnet, daß das extrudierbare Gemisch weiterhin eine Promotorquelle umfaßt, worin der Promotor aus den Gruppen IIa, IIIb, IVb und Vb des Periodensystems der Elemente ausgewählt ist.

10. Verfahren nach Anspruch 9, dadurch gekennzeichnet, daß die Promotorquelle eine unter Hydroxiden, Carbonat und Carbonaten des Promotors ausgewählte Verbindung ist.

11. Verfahren nach einem der Ansprüche 1 bis 8, dadurch gekennzeichnet, daß vor dem Calcinieren auf dem Extrudat auf Aluminiumoxidbasis eine Promotorquelle abgelagert wird, worin die Promotorquelle aus den Gruppen IIa, IIIb, IVb und Vb des Periodensystems der Elemente ausgewählt ist.

12. Katalysator, erhältlich nach einem Verfahren, wie in einem der vorstehenden Ansprüche beansprucht.

13. Verfahren zur Herstellung von Kohlenwasserstoffen, umfasssend ein Inberührungbringen von Methanol und/oder einem Gemisch aus Kohlenmonoxid und Wasserstoff mit einem Katalysator nach Anspruch 12.

**Revendications**

1. Procédé de préparation d'un catalyseur par réduction d'un progéniteur de catalyseur pouvant être obtenu en calcinant un extrudat à base d'alumine préparé par un procédé comprenant les étapes selon lesquelles :
   1) on prépare un mélange extrudable d'un progéniteur d'alumine, d'une source de cobalt, de fer ou de nickel et d'un solvant ;
   2) on extrude le mélange ; et
   3) on sèche l'extrudat ainsi formé.

2. Procédé selon la revendication 1, caractérisé en ce que la réduction est effectuée à une température de moins de 300°C.

3. Procédé selon la revendication 2, caractérisé en ce que la réduction est effectuée à une température comprise dans l'intervalle de 250 à 280°C.

4. Procédé selon l'une quelconque des revendications précédentes, caractérisé en ce que le progéniteur d'alumine est choisi dans le groupe comprenant la boehmite, la pseudoboehmite, la gibbsite et leurs mélanges.

5. Procédé selon l'une quelconque des revendications précédentes, caractérisé en ce que la source de cobalt, de fer ou de nickel est un composé choisi dans le groupe comprenant le carbonate, l'hydroxyde et le nitrate de cobalt, de fer ou de nickel et leurs mélanges.

6. Procédé selon l'une quelconque des revendications précédentes, caractérisé en ce que la source extrudable comprend une source de cobalt.

7. Procédé selon l'une quelconque des revendications précédentes, caractérisé en ce que le mélange extrudable comprend aussi un agent peptisant.

8. Procédé selon la revendication 7, caractérisé en ce que, comme agent peptisant, le mélange comprend de 10 à 20 % en poids d'acide acétique, par rapport au poids à sec d'alumine.

9. Procédé selon l'une quelconque des revendications précédentes, caractérisé en ce que le mélange extrudable comprend aussi une source de promoteur, où le promoteur est choisi parmi les groupes IIa, IIIb, IVb et Vb du tableau périodique des éléments.

10. Procédé selon la revendication 9, caractérisé en ce que la source de promoteur est un composé choisi parmi les hydroxydes, et carbonates du promoteur.

11. Procédé selon l'une quelconque des revendications 1-8, caractérisé en ce que, avant la calcination, une source de promoteur est déposée sur l'extrudat à base d'alumine, la source de promoteur étant choisie parmi les groupes IIa, IIIb, IVb et Vb du tableau périodique des éléments.

12. Un catalyseur pouvant être obtenu par un procédé selon l'une quelconque des revendications précédentes.

13. Procédé pour la préparation d'hydrocarbures, comprenant la mise en contact de méthanol et/ou d'un mélange d'oxyde de carbone et d'hydrogène avec un catalyseur selon la revendication 12.